# EUROPÄISCHE PATENTANMELDUNG

(11) **EP 4 230 551 A2**
(43) Veröffentlichungstag der Anmeldung: **23.08.2023**
(21) Anmeldenummer: 23159977.0
(22) Anmeldetag: 05.09.2018
(51) Int. Cl.: B65G 23/08, H02K 7/10, H02K 9/00

(54) **MOTORBETRIEBENE FÖRDERROLLE**

(30) Priorität: 15.09.2017 DE 102017121486
(62) Teilanmeldung aus: 18766191.3
(71) Anmelder: Interroll Holding AG, 6592 Sant' Antonino (CH)
(72) Erfinder: DOROK, Ralf, 41836 Hückelhoven (DE); WEICHBROT, Reinhold, 41836 Hückelhoven (DE)
(74) Vertreter: Kohlhof, Stephan

(57) **Zusammenfassung**

Motorbetriebene Förderrolle (1) für Förderanlagen zum Fördern von Behältern, Paletten und dergleichen, umfassend
- ein Trommelrohr (2) mit einem darin ausgebildeten Hohlraum und einer Längsachse (A),
- einen Schaft (4), der in der Längsachse (A) verläuft und auf dem das Trommelrohr (2) mittels wenigstens eines Drehlagers (6) gelagert ist, und
- eine in dem Hohlraum angeordnete elektrische Antriebseinheit (14),
wobei
eine radial innere Oberfläche (34) des Trommelrohrs (2) eine Oberflächenbehandlung zur Absorption thermischer Strahlung aufweist,
oder
wobei eine Kühlhülse (30), die radial innerlich an dem Trommelrohr (2) befestigt ist und die Antriebseinheit (14) wenigstens teilweise radial umgibt, sodass ein radialer Luftspalt (S) zwischen der Antriebseinheit (14) und der Kühlhülse (30) ausgebildet ist und dass eine radial innere Oberfläche (34) der Kühlhülse (30) eine Oberflächenbehandlung zur Absorption thermischer Strahlung aufweist.

## Beschreibung

Die Erfindung betrifft eine motorbetriebene Förderrolle für Förderanlagen zum Fördern von Behältern, Paletten und dergleichen, umfassend ein Trommelrohr mit einem darin ausgebildeten Hohlraum und einer Längsachse, einen Schaft, der in der Längsachse verläuft und auf dem das Trommelrohr mittels wenigstens eines Drehlagers gelagert ist, und eine in dem Hohlraum angeordnete elektrische Antriebseinheit. Die Erfindung betrifft ferner ein Herstellungsverfahren zum Herstellen einer motorbetriebenen Förderrolle der eingangs genannten Art.

Motorbetriebene Förderrollen dieser Bauart werden für unterschiedliche Zwecke in logistischen Anwendungen eingesetzt. So können sie beispielsweise in der Palettenförderung, bei der Förderung von Paketen in Paketversandzentren, zur Förderung von Behältern in Lagern unterschiedlicher Art oder zum Gepäcktransport in Flughäfen und in zahlreichen anderen Anwendungen eingesetzt werden. Dabei werden solche motorbetriebenen Förderrollen regelmäßig in Förderstrecken eingesetzt, die aus mehreren nebeneinander angeordneten Rollen bestehen, deren obere Umfangsfläche jeweils zur Aufnahme des Förderguts dient. In diesen Förderstrecken sind einerseits Leerlaufrollen angeordnet, die antriebslos sind und lediglich in einem Fördergestell drehbar gelagert sind. Weiterhin sind in diesen Förderstrecken angetriebene Förderrollen angeordnet, die motorbetrieben sind und durch eine elektrische Antriebseinheit in Rotation versetzt werden. Diese motorbetriebenen Förderrollen sind solcherart aufgebaut, dass die Antriebseinheit innerhalb der Rolle selbst angeordnet ist, sodass keine außerhalb des Rollenkörpers bzw. Trommelrohrs angeordneten mechanischen Komponenten erforderlich sind, um die Rotation der Rolle zu erzeugen. Die motorbetriebenen Förderrollen dienen einerseits dazu, unmittelbar über die äußere Umfangsfläche ihres Rollenkörpers das Fördergut zu transportieren, andererseits können mittels einer Übertragung der Rotation der motorbetriebenen Förderrolle auf eine oder mehrere Leerlaufrollen mittels eines Übertragungselementes, beispielsweise eines Riemenantriebs, durch die motorbetriebene Förderrolle auch die Leerlaufrollen in Rotation versetzt werden, um auch über deren äußere Umfangsfläche das Fördergut anzutreiben.

Ein Problem bei solchen motorbetriebenen Förderrollen besteht insbesondere bei Antriebseinheiten mit hoher Leistung darin, eine ausreichende Kühlung für die Antriebseinheit bereitzustellen. Eine Ölkühlung ist häufig aufgrund der baulichen Rahmenbedingungen nicht möglich und auch im Einsatz in der lebensmittelverarbeitenden Industrie nicht gewünscht. Um eine trocken laufende motorbetriebene Förderrollen also mit einer hohen Leistung ausstatten zu können, ist eine Kühlung erforderlich.

Aus DE 22 38 562 A ist beispielsweise ein Innenläuferelektromotor bekannt, der im Inneren radial innerlich der Läuferbleche ein Wärmeleitrohr aufweist, welches Wärmeleitflächen zwischen den Läuferblechpaketen verbindet und so den Läufer kühlt.

Allerdings besteht hierbei im Einsatz bei Förderrollen immer noch das Problem, die Wärme vom Inneren des Trommelrohres nach außen zu bringen.

DE 103 24 664 A1 schlägt einen Rollenmotor vor, der axial benachbart zum Elektromotor einen Kühlkörper aufweist, der über ein Rohr mit dem Stator des Außenläuferelektromotors verbunden ist um Wärme vom Inneren des Elektromotors zum axial benachbarten Kühlkörper zu leiten, der die Wärme dann an das Trommelrohr abgibt.

Nachteilig hieran ist einerseits die komplexe Montage sowie die Beschränkung auf Außenläufermotoren sowie der ungleichmäßige Wärmetransport und die ungleichmäßige Erwärmung des Trommelrohrs an der Außenseite.

Eine ähnliche Lösung ist aus DE 10 2006 060 009 A1 bekannt. Bei der dort vorgeschlagenen Lösung sind stirnseitig an beiden Stirnenden des Stators Wärmeleitelemente vorgesehen. Die oben genannten Nachteile treffen hier aber genauso zu.

Aus DE 10 2008 061 979 A1 der hiesigen Anmelderin ist ein Trommelmotor mit Innenläuferelektromotor und Wärmeleitkörper bekannt. Der Wärmeleitkörper ist axial benachbart zum Elektromotor angeordnet. Positiv an dem Wärmeleitkörper ist, dass dieser mehrere radial sich aufweitende Abstufungen aufweist, sodass die Wärmeabgabe an das Trommelrohr gleichmäßiger ist und eine gleichmäßigere Erwärmung des Trommelrohres gewährleistet werden kann. Dennoch besteht weiterhin Bedarf, mehr Wärme abführen zu können und eine gleichmäßigere und effizientere Kühlung zu erreichen.

Insbesondere soll auch ein Einsatz für im Allgemeinen im Durchmesser kleinere motorbetriebene Förderrollen gewährleistet sein, bei denen der Bauraum beengter ist als im Allgemeinen bei Trommelmotoren.

Aufgabe der vorliegenden Erfindung ist es daher, eine motorbetriebene Förderrolle der eingangs genannten Art bereitzustellen, die eine verbesserte Kühlung aufweist, einfach zu montieren ist sowie eine gleichmäßige Wärmeabgabe an dem Trommelrohr erreichen kann.

Diese Aufgabe wird bei einer motorbetriebenen Förderrolle der eingangs genannten Art in einer ersten Alternative durch eine Kühlhülse gelöst, die radial innerlich an dem Trommelrohr befestigt ist und die Antriebseinheit wenigstens teilweise radial umgibt, sodass ein radialer Luftspalt zwischen der Antriebseinheit und der Kühlhülse ausgebildet ist.

Einerseits ist also vorgesehen, dass die Kühlhülse die Antriebseinheit radial umgibt, sodass ein großflächigerer Übertragungsbereich zwischen Kühlhülse und Antriebseinheit bereitgestellt wird, als wenn die Kühlhülse axial benachbart zur Antriebseinheit angeordnet wäre. Andererseits ist die Kühlhülse nicht mit der Antriebseinheit verbunden, sondern mit dem Trommelrohr. Grundsätzlich ist es zwar denkbar, eine solche Kühlhülse auch radial äußerlich an der Antriebseinheit zu befestigen, beispielsweise auf dieser festzuklemmen. Hierbei besteht aber die Gefahr, dass die Antriebseinheit beschädigt wird und ferner können sich hierbei Probleme ergeben, wenn die Antriebseinheit gewartet werden muss.

Die Kühlhülse ist folglich erfindungsgemäß mit dem Trommelrohr verbunden und ein Luftspalt ist zwischen Antriebseinheit und Kühlhülse ausgebildet. Eine Wärmeübertragung zwischen Antriebseinheit und Kühlhülse erfolgt vornehmlich durch Wärmestrahlung und nur teilweise durch Wärmekonvektion über die Luft in dem Luftspalt. Indem die Kühlhülse die Antriebseinheit radial umgibt, wird auch eine an dem Trommelrohr äußerlich fühlbar gleichmäßigere Wärmeabgabe erreicht, da nicht nur der Abschnitt des Trommelrohres zur Wärmeabgabe genutzt werden kann, an dem die Antriebseinheit nicht angeordnet ist, sondern insbesondere auch der Bereich der Antriebseinheit selbst.

Weiterhin ist hierdurch die Montage stark vereinfacht. Änderungen an der Antriebseinheit sind nicht erforderlich. Es wird lediglich ein Spalt zwischen Antriebseinheit und Trommel- rohr genutzt, um darin eine Kühlhülse unterzubringen. Die Kühlhülse kann darüber hinaus auch dazu verwendet werden, Toleranzen auszugleichen oder den Durchmesser der Antriebseinheit an sich ändernde Durchmesser von Trommelrohren anzupassen. So ist beispielsweise denkbar, dass ein Trommelrohr einen Außendurchmesser von 50 mm, 60 mm oder 80 mm aufweisen kann. Alle drei Trommelrohre können allerdings mit derselben Antriebseinheit angetrieben werden. Für den Fall, dass die Antriebseinheit bei einem 60 mm oder 80 mm Trommelrohr verwendet wird, wäre ein radialer Abstand zwischen Antriebseinheit und innerer Oberfläche des Trommelrohres sehr groß, sodass Kühlung mittels Wärmestrahlung stark eingeschränkt ist. Hier kann erfindungsgemäß vorteilhaft die Kühlhülse eingesetzt werden. Die Kühlhülse kann dazu verwendet werden, unabhängig von einem Durchmesser des Trommelrohres einen Luftspalt zwischen Kühlhülse und Antriebseinheit konstant zu halten, sodass eine Kühlung der Antriebseinheit mittels Wärmestrahlung an die Kühlhülse weitgehend unabhängig von dem Durchmesser des Trommelrohres selbst ist. Es soll verstanden werden, dass es neben Trommelrohren mit 50, 60 und 80 mm auch Trommelrohre mit weiteren Durchmessern, etwa 55 mm, geben kann. Dies hängt in erster Linie von den gewünschten Anforderungen ab.

In einer ersten bevorzugten Ausführungsform ist die Kühlhülse kraftschlüssig mit dem Trommelrohr verbunden. Vorzugsweise ist die Kühlhülse in das Trommelrohr eingepresst. Hierdurch wird die Montage weiter vereinfacht und es ist möglich, zusätzliche Montageelemente wie Schrauben oder dergleichen zu vermeiden. Auch das Einbringen einer Schweißnaht, um die Kühlhülse zu befestigen ist nicht erforderlich. Ferner wird bei einer kraftschlüssig mit dem Trommelrohr verbundenen Kühlhülse ein flächiger Kontakt zwischen Kühlhülse und der inneren Oberfläche des Trommelrohres sichergestellt, wodurch eine Wärmeübertragung mittels Wärmeleitung von der Kühlhülse an das Trommelrohr besonders effektiv möglich ist.

Weiterhin ist bevorzugt, dass die Kühlhülse axial geschlitzt ist. Die Kühlhülse weist vor- zugsweise einen axialen Schlitz auf, der vorzugsweise parallel zur Zentralachse verläuft. Der Schlitz kann aber auch schraubwendelartig um die Zentralachse verlaufen. Hierdurch ist die Montage weiter vereinfacht. Zur Montage ist es möglich, die Hülse leicht zusammenzudrücken, um diese in das Innere des Trommelrohres zu verbringen. Ferner ist die Kühlhülse durch eine axiale Schlitzung in der Lage, gewisse radiale Toleranzen des Trommelrohres auszugleichen. Trommelrohre sind in der Regel längsgeschweißte Rohre und weisen im Inneren eine Schweißnaht auf, die in axialer Richtung verläuft. Hierdurch kann ein Innendurchmesser leicht variieren, sodass es zweckdienlich ist, die Kühlhülse so auszubilden, dass derartige Toleranzen ausgeglichen werden können und dennoch eine feste Verbindung zwischen Kühlhülse und Trommelrohr bereitgestellt wird. Die Kühlhülse ist vorzugsweise so ausgebildet, dass sie eine dauerhafte Klemmkraft auf das Trommelrohr ausübt, sodass ein unabsichtliches Lösen der Kühlhülse nicht möglich ist. Der Schlitz muss hierzu in umfänglicher Richtung nicht besonders weit sein. Er sollte eine solche Weite aufweisen, dass ein leichtes Zusammendrücken der Kühlhülse möglich ist, aber nicht zu groß, um eine Wärmeleitung möglichst optimal zu nutzen. Bevorzugt ist der axiale Schlitz durchgängig, das heißt die Kühlhülse ist vollständig geschlitzt. Dennoch ist die Kühlhülse insgesamt einstückig ausgebildet, sodass weitere Elemente und zusätzliche Montageschritte weitgehend vermieden werden können.

Zur weiter vereinfachten Montage ist es auch denkbar, dass die Kühlhülse an einem axialen Stirnende eine Montagephase aufweist, vorzugsweise mit einem axialen Ringfortsatz, der einen kleineren Durchmesser aufweist als die äußere Oberfläche der Kühlhülse. Hierdurch wird das Positionieren der Kühlhülse zum Trommelrohr und das Einfügen, beziehungsweise Einpressen der Kühlhülse in das Trommelrohr weiter vereinfacht.

Vorzugsweise weist die Antriebseinheit einen Elektromotor auf und die Kühlhülse er- streckt sich in axialer Richtung im Wesentlichen vollständig über den Elektromotor. Der Elektromotor der Antriebseinheit ist die Komponente, die maßgeblich Wärme entwickelt und deren Wärme abtransportiert werden muss. Durch eine ausreichende Kühlung des Elektromotors lässt sich eine höhere Leistung erreichen, da eine Abschalttemperatur des Elektromotors durch die verbesserte Kühlung weniger häufig, beziehungsweise weniger schnell erreicht wird. Gerade der Abschnitt der Antriebseinheit, in der der Elektromotor untergebracht ist, bedarf also der Kühlung.

Der Elektromotor ist vorzugsweise als Innenläuferelektromotor ausgebildet, wobei der Stator mit dem Schaft der motorbetriebenen Förderrolle verbunden ist und sich an dieser abstützt. Grundsätzlich ist ein solcher Aufbau von motorbetriebenen Förderrollen bekannt.

Weiterhin ist bevorzugt, dass die Antriebseinheit ein Getriebe aufweist und sich die Kühlhülse in axialer Richtung im Wesentlichen vollständig über das Getriebe erstreckt. Je nach Art des eingesetzten Getriebes kann dabei die Überdeckung des Getriebes durch die Kühlhülse unterschiedlich ausfallen. So ist beispielsweise bei einem zweistufigen Getriebe vorzugsweise vorgesehen, dass sich die Kühlhülse vollständig über dieses erstreckt, wobei bei einem dreistufigen Getriebe mit entsprechend längerem Gehäuse vorzugsweise vorgesehen ist, dass sich die Kühlhülse im Wesentlichen vollständig über dieses erstreckt, beispielsweise über die ersten beiden Getriebestufen. Hierdurch ist es möglich nur eine Kühlhülsenvariante für beide Getriebearten vorzusehen sodass Gleich- teile verwendet werden können. Grundsätzlich kann als Kühlhülse auch ein Gleichteil innerhalb einer Förderrollen-Baureihe verwendet werden, die so lang ist, dass sie bei der längsten Getriebebauweise sich vollständig über das Getriebe axial erstreckt und bei kürzerem Getriebe axial etwas übersteht. Das Getriebe ist in der Regel axial benachbart zum Elektromotor angeordnet. Das Getriebe nimmt also auch Wärme des Elektromotors auf und entwickelt selbst aufgrund von Reibung Wärme. Daher ist es bevorzugt, dass sich die Kühlhülse nicht nur axial im Wesentlichen vollständig über den Elektromotor erstreckt, sondern sich axial auch im Wesentlichen vollständig über das Getriebe er- streckt. Die Kühlhülse kann sich darüber hinaus benachbart vom Elektromotor und des Getriebes axial weiter erstrecken, um einen noch gleichmäßigeren Transport von Wärme an das Trommelrohr zu gewährleisten. Vorzugsweise erstreckt sich die Kühlhülse nahezu von einem axialen Lagerdeckel bis zu einem gegenüberliegenden axialen Lagerdeckel, oder einer Kupplungseinheit, die das Trommelrohr mit dem Getriebe kuppelt.

Weiterhin ist bevorzugt, dass die radiale Weite des Luftspalts in axialer Richtung im Wesentlichen konstant ist. Das heißt, unabhängig von der axialen Position ist der Spalt zwischen Kühlhülse und Antriebseinheit im Wesentlichen konstant. Üblicherweise hat die Antriebseinheit einen einheitlichen Außendurchmesser, wobei auch Ausführungsformen bekannt sind, bei denen die Antriebseinheit verschiedene Außendurchmesser hat, beispielsweise aufgrund eines Getriebes, das einen kleineren Außendurchmesser haben kann, als der Elektromotor. Für diesen Fall ist bevorzugt, dass die Kühlhülse einen sich radial nach innen erstreckenden Absatz aufweist, sodass der Luftspalt zwischen Antriebseinheit und Kühlhülse konstant gehalten werden kann. Kühlhülse und Antriebseinheit sind also im Wesentlichen äquidistant entlang deren axialen Überdeckungsbereich angeordnet.

Die radiale Weite des Luftspalts ist vorzugsweise in einem Bereich von 0, 1 mm bis 2,5 mm, vorzugsweise 0, 1 mm bis 2,0 mm, weiter vorzugsweise 0, 1 mm bis 1 mm und beträgt besonders bevorzugt in etwa 0,5 mm. Es hat sich gezeigt, dass sich ein zu kleiner Abstand negativ bei der Montage auswirken kann, ein zu großer Abstand allerdings zu einer schlechteren Kühlung führt, da die Wärmestrahlung abhängig ist zum Quadrat des Abstands zwischen den beiden Elementen. Während ein Abstand von 2,5 mm immer noch eine gute Kühlung bereitstellt, hat sich gezeigt, dass ein Abstand von etwa 0,5 mm optimal ist. Ein Luftspalt mit einer radialen Weite von 0,5 mm lässt eine gute Übertragung von Wärme von der Antriebseinheit auf die Kühlhülse zu, während gleichzeitig die Montage vereinfacht bleibt und keine ungewöhnlich hohen Anforderungen an die Toleranz gestellt werden müssen, die die Fertigungskosten erhöhen würden.

Gemäß einer weiteren bevorzugten Ausführungsform ist vorgesehen, dass eine radial innere Oberfläche der Kühlhülse eine Oberflächenrauigkeit von Rz 50 oder weniger, Rz 40 oder weniger, vorzugsweise Rz 30 oder weniger aufweist. Besonders bevorzugt ist eine Oberflächenrauigkeit von Rz 25 oder weniger. Die Oberfläche der Kühlhülse ist vorzugsweise geschlichtet. Es hat sich herausgestellt, dass sich eine ebene Oberfläche positiv auf die Übertagung von Wärme zwischen der Antriebseinheit und der Kühlhülse auswirkt. Die Oberfläche sollte aber möglichst wenig reflektierend sein, das heißt beispielsweise nicht poliert. Dennoch ist eine unebene Oberfläche mit Riefen oder dergleichen nicht positiv für die Wärmeübertragung. Eine geschlichtete Oberfläche mit einer Oberflächenrauigkeit von Rz 25 hat sich als besonders geeignet herausgestellt, da dies noch mit gängigen Fertigungsverfahren herstellbar ist, ohne zu hohe Fertigungskosten zu verursachen, aber gleichzeitig eine gute Wärmeübertragung zwischen Antriebseinheit und Kühlhülse zulässt.

Erfindungsgemäß ist vorgesehen, dass eine radial innere Oberfläche der Kühlhülse eine Oberflächenbehandlung zur Absorption thermischer Strahlung aufweist.

Die Idee, eine Oberflächenbehandlung zur Absorption thermischer Strahlung auf eine radial innere Oberfläche eines Elements zu übertragen wird hierin auch unabhängig offenbart. Insofern ist die technische Idee der Oberflächenbehandlung zur Absorption thermischer Strahlung auch auf das Trommelrohr übertragen und auch diese Lösung ist hierin beansprucht. Das heißt, in einer zweiten Alternative wird unabhängig von der ersten Alternative eine motorbetriebene Förderrolle für Förderanlagen zum Fördern von Behältern, Paletten und dergleichen beansprucht, die Förderrolle umfasst: ein Trommelrohr mit einem darin ausgebildeten Hohlraum und einer Längsachse, einem Schaft, der in der Längsachse verläuft und auf dem das Trommelrohr mittels wenigstens eines Drehlagers gelagert ist, eine in dem Hohlraum angeordnete elektrische Antriebseinheit, wobei eine radial innere Oberfläche des Trommelrohrs eine Oberflächenbehandlung zur Absorption thermischer Strahlung aufweist, In solchen Fällen kann je nach Abstand zwischen Trommelrohr und Antriebseinheit die Kühlhülse entfallen.

Die Oberflächenbehandlung zur Absorption thermischer Strahlung verbessert die Übertragung von Wärme mittels Wärmestrahlung von der Antriebseinheit auf die Kühlhülse und/oder das Trommelrohr weiterhin. Es hat sich herausgestellt, dass durch Vermeidung von Reflexion eine Übertragung der Wärme von der Antriebseinheit auf die Kühlhülse und/oder das Trommelrohr weiter verbessert werden kann, und so eine noch effektivere Kühlung der Antriebseinheit möglich ist.

Als geeignete Oberflächenbehandlungen haben sich herausgestellt: Beschichten mit dunklen Pigmenten, vorzugsweise schwarz, vorzugsweise matt; Eloxieren; Brünieren; Verkupfern. Auch Mischungen hieraus sind bevorzugt. Insbesondere aber beim Eloxieren und Verkupfern ist hierbei wichtig, dass möglichst dunkle, vorzugsweise schwarze, Oxide verwendet werden, insbesondere Kupferoxid. Beschichten mit dunklen Pigmenten kann insbesondere mittels Lackieren erfolgen, wobei die Verwendung von mattem Lack gegenüber der Verwendung von glänzendem Lack bevorzugt ist. Insgesamt sollte beachtet werden, dass die Ausbildung der Kühlhülse und/oder der inneren Oberfläche des Trommelrohrs als schwarzer Strahler ideal ist, und eine Oberflächenbehandlung oder eine Kombination von Oberflächenbehandlung gewählt werden sollte, die diesem Ideal möglichst nahe kommt.

Es ist auch denkbar, sowohl eine Kühlhülse vorzusehen als auch eine Oberflächenbehandlung für denjenigen axialen Abschnitt der inneren Oberfläche des Trommelrohrs, die nicht mittels der Kühlhülse bedeckt ist.

Weiterhin ist bevorzugt, dass die Kühlhülse eine Wärmeleitfähigkeit von 100 W/mK oder mehr, vorzugsweise 130 W/mK oder mehr aufweist. Auch noch höhere Wärmeleitfähigkeiten von beispielsweise 220 W/mK oder auch 160 W/mK sind bevorzugt. Allerdings verursachen solche Materialien in der Regel höhere Fertigungskosten. Eine Wärmeleitfähigkeit ca. 130 W/mK hat sich hier als optimal herausgestellt.

Bevorzugt ist außerdem, dass die Kühlhülse eine Dichte von 3,5kg/dm3 oder weniger, vorzugsweise 3,0kg/dm3 oder weniger, besonders bevorzugt 2,9kg/dm3 oder weniger aufweist. Die Kühlhülse wird erfindungsgemäß zusammen mit dem Trommelrohr bewegt und muss in Rotation versetzt werden. Um hier keine zu großen Trägheitsmomente zu erzeugen, ist bevorzugt, dass ein Leichtmetall verwendet wird. Weiterhin eignen sich Leichtmetalle auch zur Wärmeleitung, sodass hier eine Synergie erreicht werden kann. Dennoch sollte ein Vollmaterial verwendet werden und kein poröses Material, um die Wärmeleitfähigkeit möglichst hoch zu halten.

Bevorzugt ist die Kühlhülse aus einem Aluminiummaterial gebildet, vorzugsweise einer Aluminiumlegierung. Geeignet als Legierungselemente sind hier insbesondere Kupfer, Magnesium, Blei, Mangan und Silizium.

Gemäß einer weiteren bevorzugten Ausführungsform umfasst die motorbetriebene Förderrolle einen zur Übertragung eines Drehmoments von der Antriebseinheit auf eine Innenumfangsfläche des Trommelrohrs ausgebildete Kupplungseinheit, welche eine Kupplungsbuchse aufweist, die einen Antriebsabschnitt, der mit der Antriebseinheit in Verbindung steht, und einen äußeren peripheren Abtriebsabschnitt aufweist, wobei die Kupplungsbuchse nur punktuell reibschlüssig zur Übertragung von Drehmomenten mit der Innenumfangsfläche des Trommelrohrs verbunden ist. Im Stand der Technik sind auch umfängliche reibschlüssige Verbindungen bekannt und auch solche können hier eingesetzt werden. Eine punktuell reibschlüssige Verbindung zwischen Kupplungsbuchse und Trommelrohr hat aber den Vorteil, dass die Konstruktion vereinfacht ist. Sie lassen gegenüber formschlüssigen Verbindungen und vollumfänglich reibschlüssigen Verbindungen höhere Toleranzen zu, wodurch die Fertigungskosten verringert sind. Dadurch kann auch ein Problem von überhöhten Pressungen aufgrund von mangelnden Toleranzen vermieden werden und die Fertigung so insgesamt vereinfacht und die Förderrolle kostengünstiger hergestellt werden.

Die Kupplungsbuchse kann dazu eine Mehrzahl an radialen Nasen aufweisen, die dazu vorgesehen sind, mit der inneren Umfangsfläche des Trommelrohrs in Kontakt zu stehen. Die Nasen bilden auf diese Weise Kontaktpunkte, an denen eine punktuelle reibschlüssige Verbindung zwischen Kupplungsbuchse und Trommelrohr hergestellt wird. Die Nasen sind vorzugsweise im Querschnitt abgerundet ausgebildet und/oder weisen eine leichte trapezförmige Form auf, die am radial äußeren Ende ein leichtes Plateau ausbildet. Die Nasen weisen bevorzugt eine Außenkontur auf, die in etwa teilzylindrisch ist und sich in axialer Richtung wenigstens teilweise, vorzugsweise vollständig, über die Kupplungsbuchse erstreckt. Vorzugsweise definieren die radialen Nasen gemeinsam einen Durchmesser der größer ist als der Durchmesser der Innenumfangsfläche des Trommelrohrs. Hierdurch wird eine besonders gute reibschlüssige Verbindung zwischen Kupplungsbuchse und Trommelrohr erreicht, da die Nasen gemeinsam ein Übermaß definieren und die Kupplungsbuchse so unter Vorspannung in das Trommelrohr eingesetzt ist. Hierzu sind die Nasen vorzugsweise nachgiebig ausgebildet. Beispielsweise ist die Kupplungsbuchse axial geschlitzt. Vorzugsweise sind die Nasen zudem innerlich hohl ausgebildet.

Die Kupplungseinheit mit Kupplungsbuchse und die Kühlhülse können in einem Arbeitsschritt montiert werden. Es ist zudem denkbar, dass die Kupplungseinheit und die Kühlhülse einstückig ausgebildet sind oder als eine Baueinheit, als ein Modul, zusammengefasst sind, um gemeinsam montiert zu werden.

In einem zweiten Aspekt der Erfindung wird die eingangs genannte Aufgabe bei einem Herstellungsverfahren für eine motorbetriebene Förderrolle nach einer der vorstehend beschriebenen bevorzugten Ausführungsformen einer Förderrolle gemäß dem ersten Aspekt der Erfindung mit den Schritten gelöst: Bereitstellen oder Herstellen eines Trommelrohres; Bereitstellen oder Herstellen einer Kühlhülse; Einpressen der Kühlhülse in das Trommelrohr zum Befestigen der Kühlhülse in dem Trommelrohr; und Einsetzen einer Antriebseinheit in die Kühlhülse, sodass ein radialer Luftspalt zwischen der Antriebseinheit und der Kühlhülse ausgebildet ist.

Es soll verstanden werden, dass die motorbetriebene Förderrolle gemäß dem ersten Aspekt der Erfindung und das Herstellungsverfahren gemäß dem zweiten Aspekt der Erfindung gleiche und ähnliche Unteraspekte aufweisen, wie sie insbesondere in den Unteransprüchen niedergelegt sind. Insofern wird für bevorzugte Ausführungsformen, weitere Merkmale sowie deren Vorteile auf die obige Beschreibung zur motorbetriebenen Förderrolle gemäß dem ersten Aspekt der Erfindung vollumfänglich verwiesen.

In einer ersten Variante des Herstellungsverfahrens wird die Kühlhülse so in das Trommelrohr eingepresst, dass ein axialer Schlitz der Kühlhülse nicht entlang einer axialen Schweißnaht des Trommelrohrs verläuft. Wenn die Kühlhülse in das Trommelrohr eingepresst ist, übt diese auf das Trommelrohr einen Innendruck und so eine Tangentialkraft aus, die sich nachteilig auf die Schweißnaht auswirken kann. Es hat sich gezeigt, dass ein mechanischer Krafteintrag, sei es aufgrund der Tangentialkraft, oder sei es aufgrund von Scherung durch ein Verdrehen der Kühlhülse im Bereich der Schweißnaht möglichst vermieden werden soll, und daher der axiale Schlitz der Kühlhülse so ausgerichtet ist, dass die Schweißnaht mit einem flächigen Teil der Kühlhülse überdeckt ist, das heißt, der axiale Schlitz der Kühlhülse nicht entlang einer axialen Schweißnaht des Trommelrohrs verläuft.

Weiterhin umfasst das Herstellungsverfahren vorzugsweise die Schritte: Auswählen eines Trommelrohrs mit einem vorbestimmten Durchmesser aus einer Mehrzahl an Trommelrohren, wobei die Mehrzahl an Trommelrohren wenigstens jeweils ein Trommelrohr mit den Außendurchmessern 50 mm und 60 mm aufweist; und Auswählen einer Kühlhülse aus einer Mehrzahl an Kühlhülsen, wobei die Mehrzahl an Kühlhülsen wenigstens jeweils eine Kühlhülse aufweist, die für ein Trommelrohr mit dem Außendurchmesser 50 mm und für ein Trommelrohr mit dem Außendurchmesser 60 mm vorgesehen ist; wobei das Auswählen der Kühlhülse so ausgeführt wird, dass nach Einsetzen der Antriebseinheit in die Kühlhülse, der Luftspalt eine radiale Weite in einem Bereich von 0,1 mm bis 2 mm, vorzugsweise 0,1 mm bis 1 mm aufweist, besonders bevorzugt in etwa 0,5 mm beträgt. Vorzugsweise umfasst die Mehrzahl an Trommelrohren wenigstens ein Trommelrohr mit einem Außendurchmesser von 80 mm und die Mehrzahl an Kühlhülsen wenigstens eine Kühlhülse, die für ein Trommelrohr mit dem Außendurchmesser 80 mm vorgesehen ist.

Wie bereits oben erwähnt, kann die Antriebseinheit für Trommelrohre mit 50 mm, 60 mm und 80 mm Durchmessern identisch ausgebildet sein. Um allerdings eine möglichst gute Kühlung der Antriebseinheit zu gewährleisten, unterscheidet sich die Kühlhülse je nach Außendurchmesser des Trommelrohrs. Der Außendurchmesser der Kühlhülse muss an das Trommelrohr angepasst sein, während der Innendurchmesser der Kühlhülse im Wesentlichen identisch gebildet sein kann. Die Kühlhülse wirkt also als Toleranzausgleich zwischen Trommelrohr und Antriebseinheit und führt zu einem Wärmeabtransport von der Antriebseinheit an das Trommelrohr. Je nach Anforderung, die den Durchmesser des Trommelrohrs vorbestimmt, wird gemäß diesem Verfahren dann entweder ein Trommelrohr mit dem Außendurchmesser 50 mm, 60 mm oder auch 80 mm ausgewählt, die entsprechende Kühlhülse passend zu diesem Außendurchmesser ausgewählt und die Antriebseinheit eingesetzt.

Die Montage ist also deutlich vereinfacht und gleiche Teile können verwendet werden. Unabhängig von der Größe des Trommelrohrs wird eine ausreichende Kühlung der Antriebseinheit bereitgestellt, sodass die Antriebseinheit bei gleichem Elektromotor mit einer höheren Leistung ausgestattet sein kann.

Weiterhin umfasst das Herstellungsverfahren vorzugsweise die Schritte: Bereitstellen oder Herstellen einer Kupplungseinheit, die einen Antriebsabschnitt zum in Verbindung stehen mit der Antriebseinheit, und einen äußeren peripheren Abtriebsabschnitt aufweist; und Einpressen der Kupplungseinheit in das Trommelrohr, wobei die Kupplungseinheit nur punktuell reibschlüssig zur Übertragung von Drehmomenten mit der Innenumfangsfläche des Trommelrohrs verbunden ist. Vorzugsweise werden das Einpressen der Kupplungseinheit und das Einpressen der Kühlhülse in einem Schritt durchgeführt. Vorzugsweise umfasst die Kupplungseinheit eine Kupplung und eine Kupplungsbuchse, wobei die Kupplungsbuchse nur punktuell reibschlüssig zur Übertragung von Drehmomenten mit der Innenumfangsfläche des Trommelrohrs verbunden ist.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: einen Vollschnitt durch eine motorbetriebene Förderrolle gemäß einem ersten Ausführungsbeispiel;
- Fig. 2: einen Vollschnitt durch eine motorbetriebene Förderrolle gemäß einem zweiten Ausführungsbeispiel;
- Fig. 3: eine Seitenansicht einer Kühlhülse;
- Fig. 4: eine Frontalansicht der Kühlhülse aus Fig. 3;
- Fig. 5: eine Frontalansicht einer Kühlhülse mit einer oberflächenbehandelten inneren Oberfläche; und
- Fig. 6: eine perspektivische Ansicht einer Kupplungseinheit mit einer Kupplungsbuchse.

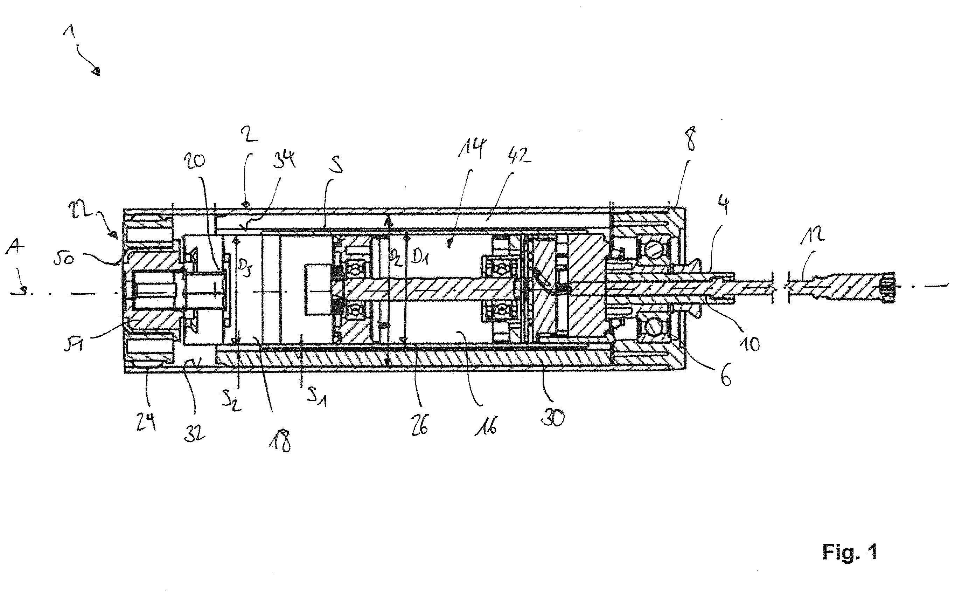

Eine motorbetriebene Förderrolle 1 weist ein Trommelrohr 2 auf, welches eine Zentralachse A hat. Das Trommelrohr 2 ist drehbar um die Zentralachse A. Dazu weist die Förderrolle einen Schaft 4 auf, der sich mit Bezug auf Fig. 1 rechts aus dem Trommelrohr 2 heraus erstreckt und in einem Gestell für eine Förderanlage montierbar ist. Auf der mit Bezug auf Fig. 1 linken Seite des Trommelrohrs 2 ist kein Schaft dargestellt; die Förderrolle ist hier vielmehr teilausgebrochen. Im üblichen Betrieb wäre an der linken Seite mit Bezug auf Fig. 1 ein weiterer Schaft vorgesehen, der in der in Fig. 1 gezeigten Darstellung der Übersichtlichkeit halber weggelassen ist.

Auf dem Schaft 4 ist ein Drehlager 6 angeordnet, welches einen Deckel 8 trägt, der in das mit Bezug auf Fig. 1 rechte Ende des Trommelrohrs 2 eingepresst ist.

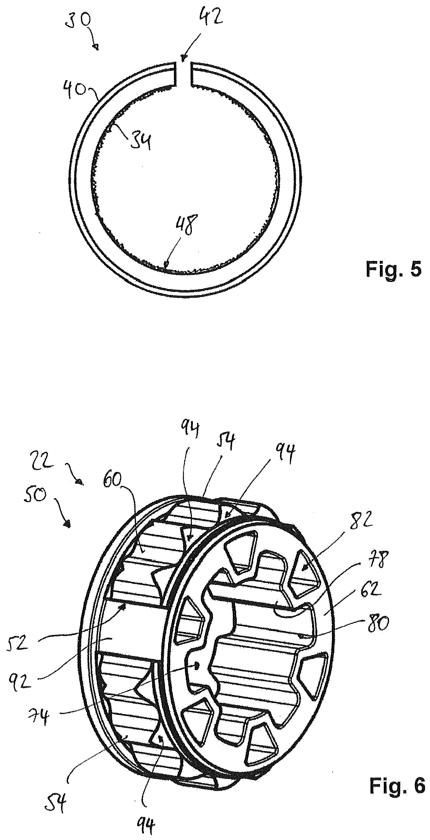

Der Schaft 4 hat eine zentrale Bohrung 10, durch die ein Versorgungskabel 12 verläuft. Das Versorgungskabel 12 läuft zu einer Antriebseinheit 14. Die Antriebseinheit 14 weist einen Elektromotor 16 sowie ein Getriebe 18 auf, welches hier als Getriebekartusche ausgebildet ist. An der Abtriebsseite 20 des Getriebes 18 ist eine Kupplungseinheit 22 vorgesehen, die später mit Bezug auf Fig. 6 noch genauer beschrieben werden wird. Diese Kupplungseinheit 22 dient dazu, das vom Elektromotor 16 gelieferte Drehmoment über eine reibschlüssige Verbindung 24 auf das Trommelrohr 2 zu übertragen, um das Trommelrohr 2 in Drehung zu versetzen.

Die Antriebseinheit 14 weist ein Gehäuse 26 auf, welches im Wesentlichen rotationssymmetrisch ist. Das Gehäuse 26 hat einen Durchmesser D1, der beispielsweise 40 mm betragen kann. Ein Innendurchmesser D2 des Trommelrohrs beträgt beispielsweise 48 mm, wenn das Trommelrohr einen Außendurchmesser von 50 mm hat. Es soll verstanden werden, dass diese Werte nur beispielhaft sind und ebenso andere Werte möglich und bevorzugt sind. Die genauen Werte hängen insbesondere von der Art der Antriebseinheit 14 sowie von Wandstärken des Trommelrohrs 2 und dem Außendurchmesser des Trommelrohrs 2 ab.

Um eine Kühlung der Antriebseinheit 14 zu bewirken, ist gemäß der Erfindung eine Kühlhülse 30 vorgesehen, die die Antriebseinheit 14 wenigstens teilweise radial umgibt und an dem Trommelrohr 2 befestigt ist. Die Kühlhülse 30 ist genauer gesagt in das Trommelrohr 2 eingepresst und liegt flächig an der Innenumfangsfläche 32 des Trommelrohrs 2 an. In axialer Richtung erstreckt sich die Kühlhülse 30 gemäß diesem Ausführungsbeispiel (Fig. 1) von dem Deckel 8, bzw. knapp vor dem Deckel 8 bis über wenigstens einen Teil des Getriebes 18 und umschließt so radial sämtliche Elemente der Förderrolle 1, die Wärme emittieren.

Die Antriebseinheit 14 ist nicht-drehend mit dem Schaft 4 verbunden und stützt sich gegen den Schaft 4 ab. Das Gehäuse 26 der Antriebseinheit 14 rotiert ebenfalls nicht. Um also eine Rotation des Trommelrohrs 2 samt der Kühlhülse 30 zu ermöglichen ist ein Luftspalt S zwischen der Antriebseinheit 14 und der Kühlhülse 30 vorgesehen. Der Luftspalt S hat in diesem Ausführungsbeispiel (Fig. 1) im Bereich des Gehäuses 26 eine radiale Weite S1 und im Bereich des Getriebes 18, das nicht von dem Gehäuse 26 über- deckt ist, eine radiale Weite S2. Die innere Oberfläche 34 der Kühlhülse 30 ist eben und weist keine Absätze oder dergleichen auf. Daher ist die radiale Weite S2 im Bereich des Getriebes 18 etwas größer als die radiale Weite S1 im Bereich des Gehäuses 26. Während die radiale Weite S1 in etwa 0,5 mm beträgt, beträgt die radiale Weite S2 etwa 2 mm.

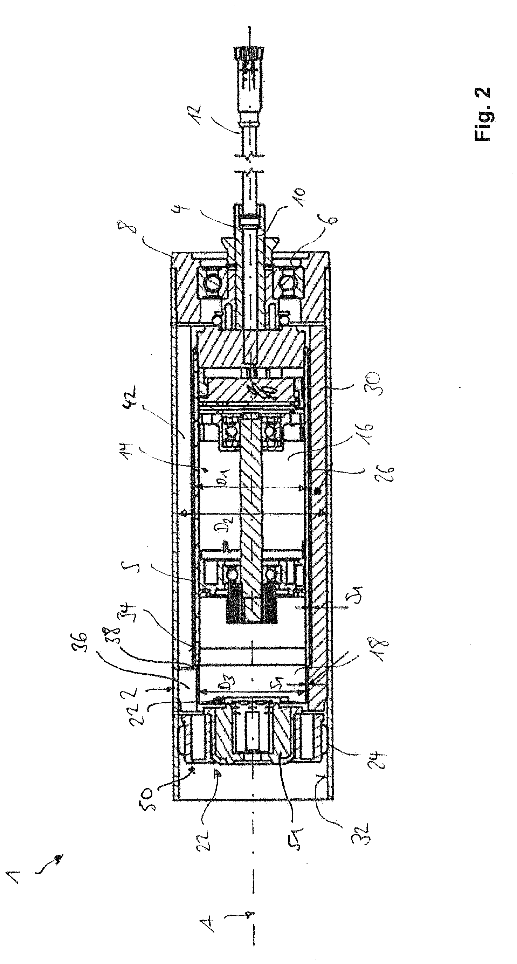

Fig. 2 zeigt ein zweites Ausführungsbeispiel der motorbetriebenen Förderrolle 1. Gleiche und ähnliche Elemente sind in diesem zweiten Ausführungsbeispiel mit gleichen Bezugszeichen wie im ersten Ausführungsbeispiel (Fig. 1) bezeichnet, sodass vollumfänglich auf die obige Beschreibung zum ersten Ausführungsbeispiel Bezug genommen wird. Im Folgenden werden insbesondere die Unterschiede zum ersten Ausführungsbeispiel hervorgehoben.

Im Unterschied zum ersten Ausführungsbeispiel weist die Antriebseinheit 14 nur zwei Getriebestufen auf, so dass sich die Kühlhülse 30 komplett axial über Elektromotor 16 und Getriebe 18 erstreckt. Ferner weist die Kühlhülse 30 einen Abschnitt 36 auf, der mit einem Absatz 38 abgetrennt ist. Der Abschnitt 36 hat einen leicht verkleinerten Innendurchmesser, sodass die Kühlhülse 30 in diesem Abschnitt 36 an den verringerten Außendurchmesser D3 des Getriebes 18 angepasst ist. Auf diese Weise ist der Luftspalt S einheitlich und die radiale Weite S1 ist sowohl im Bereich des Gehäuses 26 vorgesehen als auch im Bereich des Getriebes 18. Eine Aufweitung des Luftspalts S wie im ersten Ausführungsbeispiel (Fig. 1) ist in diesem Ausführungsbeispiel (Fig. 2) nicht vorgesehen.

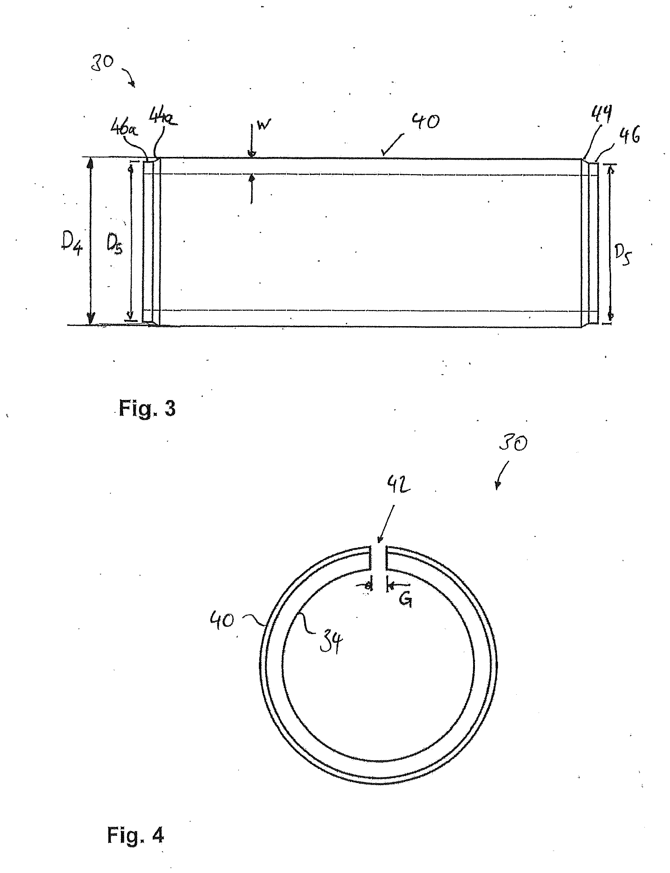

Die Kühlhülse 30 selbst ist mit Bezug auf die Figuren 3 bis 5 im Detail dargestellt. Bei der in Fig. 3 dargestellten Kühlhülse 30 handelt es sich um die Kühlhülse 30 des ersten Ausführungsbeispiels (Fig. 1). Die Kühlhülse 30 hat eine im Wesentlichen zylindrische Form und ist aus einem Stück gefertigt, beispielsweise mittels (CNC-)Drehen, (CNC-)Fräsen, Strangprofilpressen oder/oder Walzen, insbesondere Kaltwalzen. Die Kühlhülse 30 weist einen Außendurchmesser D4 auf, der etwas größer ist als der Innendurchmesser D2 des Trommelrohrs 2, um einen Presssitz zu ermöglichen. Um die Montage der Kühlhülse 30 zu ermöglichen, ist diese axial geschlitzt und weist einen Schlitz 42 auf. Der Schlitz hat eine Weite G, die beispielsweise im Bereich von 4 mm liegen kann. Die Weite G ist abhängig von der Wandstärke W der Kühlhülse 30 sowie von der Differenz des Außendurchmessers D4 und des Innendurchmessers D2 sowie auch dem Material der Kühlhülse 30. Die Weite G des Schlitzes 42 sollte so bemessen sein, dass ein Fügen der Kühlhülse 30 in das Innere des Trommelrohrs 2 auch unter Berücksichtigung von Maximaltoleranzen möglich ist.

Um die Montage weiter zu vereinfachen, weist die Kühlhülse 30 beidseits Montagefasen 44, 44a auf, die jeweils in einen Absatz 46, 46a mit einem Durchmesser D5 mündet. Der Durchmesser D5 ist kleiner als der Durchmesser D4, beispielsweise etwa 4 - 6 % kleiner. Der Durchmesser D5 sollte so bemessen sein, dass er auch etwas kleiner als der Durchmesser D2 ist, sodass die Kühlhülse 30 bei der Montage zunächst problemlos und ohne Aufbringen einer großen Kraft mit dem Absatz 46 in das Innere des Trommelrohrs 2 eingesetzt werden kann, bevor eine radiale Kompression der Kühlhülse 30 erfolgt, um diese dann vollständig in das Innere des Trommelrohrs 2 zu verbringen.

Die Neigung der Fase 44 kann beispielsweise im Bereich von 60° zur Zentralachse A liegen.

Durch die beidseitig vorhandenen Fasen 44, 44a kann die Kühlhülse in jeder der zwei denkbaren Ausrichtungen eingepresst werden, sodass eine Fehlmontage ausgeschlossen ist und ein Ausrichtungsschritt der Kühlhülse, um eine definierte Seite der Kühlhülse voran einzupressen, in einer automatisierten Montage entfallen kann.

Sowohl die innere Oberfläche 34 als auch die äußere Oberfläche 40 der Kühlhülse 30 weisen eine Oberflächenrauigkeit von vorzugsweise Rz 30 oder weniger, vorzugsweise Rz 25 oder weniger auf. Das heißt, beide Oberflächen 34, 40 sind vorzugsweise geschlichtet. Die äußere Oberfläche 40 sollte so gebildet sein, dass eine möglichst sichere kraftschlüssige Verbindung mit der Innenumfangsfläche 32 des Trommelrohrs 2 erreicht wird und gleichzeitig ein möglichst großflächiger Kontakt, um eine Wärmeleitung von der Kühlhülse 30 auf das Trommelrohr 2 zu ermöglichen.

Die innere Oberflächen 34 sollte so gebildet sein, dass sie nicht reflektiert, sondern eine möglichst effiziente Wärmestrahlung von der Antriebseinheit 14 auf die Kühlhülse 30 zulässt.

Zu diesem Zweck ist vorgesehen, dass die Kühlhülse 30 oder alternativ das Trommelrohr auf der inneren Oberfläche 34 eine Oberflächenbehandlung 48 aufweist, beispielsweise eine Brünierung, eine Eloxierung oder eine farbliche Schicht, insbesondere mit einer dunklen Farbe, insbesondere schwarz, um möglichst gut Wärmestrahlung zu absorbieren und wenig Wärmestrahlung zu reflektieren.

Insgesamt ist die Kühlhülse 30 vorzugsweise aus einem Leichtmetall gebildet. Besonders zweckdienlich ist hier Aluminium. Dabei sollte Aluminium verwendet werden, welches eine Dichte von vorzugsweise 3 kg/dm3 oder weniger aufweist und eine Wärmeleitfähigkeit von vorzugsweise 130 W/mK oder mehr aufweist. Hierzu können dem Aluminium geeignete Legierungsmetalle zugesetzt werden.

Fig. 6 zeigt nun einen Teil der Kupplungseinheit 22, der in den Figuren 1 und 2 bereits im Schnitt dargestellt wurde. Die Kupplungseinheit 22 wirkt ausschließlich kraftschlüssig und wird vorzugsweise gemeinsam mit der Kühlhülse 30 montiert. Diese Kupplungseinheit 22 ist in der deutschen Patentanmeldung DE 10 2016 124 689 der hiesigen Anmelderin beschrieben, deren Offenbarungsgehalt vollständig hierin mit einbezogen wird.

Die Kupplungseinheit 22 weist eine Kupplungsbuchse 50 auf, in deren zentrale Öffnung 74 ein gezahntes Wellenstück 51 eingreifen kann. Das gezahnte Wellenstück 51 ist mit dem Abtrieb des Getriebes 18 verbunden.

Die Kupplungsbuchse 50 ist zweiteilig ausgebildet und weist ein radial inneres Teil 62 und ein radial äußeres Teil 60 auf. Das radial äußere Teil 60 bildet einen Abtriebsabschnitt 52, der kraftschlüssig mit der Innenumfangsfläche 32 des Trommelrohrs 2 verbunden ist.

Das innere Teil 62 weist eine im Wesentlichen zylindrische Umfangsfläche 92 auf, auf der das äußere Teil 60 in Form eines gewellten Blechstreifens aufgebracht ist. Der gewellte Blechstreifen des äußeren Teils 60 bildet eine Mehrzahl an Nasen 54 aus, die in dieser Ausführungsform hohl sind und im Inneren einen Hohlraum 94 definieren. Hierdurch ist die Elastizität der Nasen 54 bereitgestellt, und Fertigungstoleranzen können ausgeglichen werden.

Das innere Teil 62 weist Vorsprünge 78 auf, in denen axiale Ausnehmungen 82 vorgesehen sind. Diese axialen Ausnehmungen 82 dienen einerseits zur Gewichtsreduktion andererseits dazu, die Vorsprünge 78 elastisch zu gestalten, um eine Drehmomentübertragung von dem gezahnten Wellenstück 51 elastisch auf das innere Teil 62 zu ermöglichen.

Der gewellte Blechstreifen, der den äußeren Teil 60 bildet, wirkt sowohl kraftschlüssig mit der Innenumfangsfläche 32 als auch mit der äußeren Oberfläche 92 des inneren Teils 62 zusammen. Durch die Flexibilität des Blechstreifens können Toleranzen ausgeglichen werden und eine dauerhafte kraftschlüssige Verbindung ist bereitgestellt. Es ist denkbar, dass die Kupplungsbuchse 50 mittels der Kühlhülse 30 in das Innere des Trommelrohrs 2 eingeschoben wird. Hierdurch kann ein weiteres Montagewerkzeug zum Montieren der Kupplungsbuchse 50 eingespart werden, da die Kupplungsbuchse 50 in einem Schritt mit der Kühlhülse 30 montiert wird.

## Patentansprüche

1. Motorbetriebene Förderrolle (1) für Förderanlagen zum Fördern von Behältern, Paletten und dergleichen, umfassend
- ein Trommelrohr (2) mit einem darin ausgebildeten Hohlraum und einer Längsachse (A),
- einen Schaft (4), der in der Längsachse (A) verläuft und auf dem das Trommelrohr (2) mittels wenigstens eines Drehlagers (6) gelagert ist, und
- eine in dem Hohlraum angeordnete elektrische Antriebseinheit (14),
**dadurch gekennzeichnet,**
**dass** eine radial innere Oberfläche (34) des Trommelrohrs (2) eine Oberflächenbehandlung zur Absorption thermischer Strahlung aufweist,
oder
**dass** eine Kühlhülse (30), die radial innerlich an dem Trommelrohr (2) befestigt ist und die Antriebseinheit (14) wenigstens teilweise radial umgibt, sodass ein radialer Luftspalt (S) zwischen der Antriebseinheit (14) und der Kühlhülse (30) ausgebildet ist und dass eine radial innere Oberfläche (34) der Kühlhülse (30) eine Oberflächenbehandlung zur Absorption thermischer Strahlung aufweist.

2. Motorbetriebene Förderrolle nach einem der vorstehenden Ansprüche, wobei Antriebseinheit (14) einen Elektromotor (16) aufweist und sich die Kühlhülse (30) in axialer Richtung im Wesentlichen vollständig über den Elektromotor (16) erstreckt.

3. Motorbetriebene Förderrolle nach einem der vorstehenden Ansprüche, wobei Antriebseinheit (14) ein Getriebe (18) aufweist und sich die Kühlhülse (30) in axialer Richtung im Wesentlichen vollständig über das Getriebe (18) erstreckt.

4. Motorbetriebene Förderrolle nach einem der vorstehenden Ansprüche, wobei die radiale Weite (S1, S2) des Luftspalts (S) in axialer Richtung im Wesentlichen konstant ist.

5. Motorbetriebene Förderrolle nach einem der vorstehenden Ansprüche, wobei der Luftspalt (S) eine radiale Weite (S1, S2) in einem Bereich von 0,1 mm bis 2,5 mm, vorzugsweise 0,1 mm bis 1 mm aufweist, besonders bevorzugt in etwa 0,5 mm beträgt.

6. Motorbetriebene Förderrolle nach einem der vorstehenden Ansprüche, wobei eine radial innere Oberfläche (34) der Kühlhülse (30) eine Oberflächenrauheit von Rz 50 oder weniger, Rz 40 oder weniger, vorzugsweise Rz 30 oder weniger aufweist.

7. Motorbetriebene Förderrolle nach einem der vorherigen Ansprüche, wobei die Oberflächenbehandlung wenigstens eines der folgenden umfasst: Beschichten mit dunklen Pigmenten, vorzugsweise schwarz, vorzugsweise matt; Eloxieren; Brünieren; Verkupfern.

8. Motorbetriebene Förderrolle nach einem der vorstehenden Ansprüche, wobei die Kühlhülse (30) eine Wärmeleitfähigkeit von 100 W/mK oder mehr, vorzugsweise 130 W/mK oder mehr aufweist.

9. Motorbetriebene Förderrolle nach einem der vorstehenden Ansprüche, wobei die Kühlhülse (30) eine aus einem Material mit einer Dichte von 3,5kg/dm3 oder weniger, vorzugsweise 3,0kg/dm3 oder weniger, besonders bevorzugt 2,9kg/dm3 oder weniger gebildet ist.

10. Motorbetriebene Förderrolle nach einem der vorstehenden Ansprüche, wobei die Kühlhülse (30) aus einem Aluminiummaterial gebildet ist.

11. Motorbetriebene Förderrolle nach einem der vorstehenden Ansprüche, ferner umfassend eine zur Übertragung eines Drehmoments von der Antriebseinheit (14) auf eine Innenumfangsfläche (32) des Trommelrohrs (2) ausgebildete Kupplungseinheit (22), welche eine Kupplungsbuchse (50) aufweist, die einen Antriebsabschnitt, der mit der Antriebseinheit in Verbindung steht, und einen äußeren peripheren Abtriebsabschnitt aufweist,
wobei die Kupplungsbuchse (50) nur punktuell reibschlüssig zur Übertragung von Drehmomenten mit der Innenumfangsfläche (32) des Trommelrohrs (2) verbunden ist.

12. Herstellungsverfahren für eine motorbetriebene Förderrolle (1) nach einem der vorstehenden Ansprüche, mit den Schritte:
- Bereitstellen oder Herstellen eines Trommelrohres (2);
- Bereitstellen oder Herstellen einer Kühlhülse (30);
- Einpressen der Kühlhülse (30) in das Trommelrohr (2) zum Befestigen der Kühlhülse (30) in dem Trommelrohr (2); und
- Einsetzen einer Antriebseinheit (14) in die Kühlhülse (30), sodass ein radialer Luftspalt (S) zwischen der Antriebseinheit (14) und der Kühlhülse (30) ausgebildet ist.

13. Herstellungsverfahren nach Anspruch 14, wobei die Kühlhülse (30) so in das Trommelrohr (2) eingepresst wird, dass ein axialer Schlitz der Kühlhülse (30) nicht entlang einer axialen Schweißnaht des Trommelrohrs (2) verläuft.

14. Herstellungsverfahren nach Anspruch 12 oder 13, umfassend:
- Auswählen eines Trommelrohrs (2) mit einem vorbestimmten Durchmesser aus einer Mehrzahl an Trommelrohren (2), wobei die Mehrzahl an Trommelrohren (2) wenigstens jeweils ein Trommelrohr (2) mit den Außendurchmessern 50mm und 60mm aufweist; und
- Auswählen einer Kühlhülse (30) aus einer Mehrzahl an Kühlhülsen (30), wobei die Mehrzahl an Kühlhülsen (30) wenigstens jeweils eine Kühlhülse (30) aufweist, die für ein Trommelrohr (2) mit den Außendurchmessern 50mm und 60mm vorgesehen ist;
wobei das Auswählen der Kühlhülse (30) so ausgeführt wird, dass nach Einsetzen der Antriebseinheit (14) in die Kühlhülse (30), der Luftspalt (S) eine radiale Weite (S1, S2) in einem Bereich von 0,1 mm bis 2,5 mm, vorzugsweise 0,1 mm bis 1 mm aufweist, besonders bevorzugt in etwa 0,5 mm beträgt.
